Europäisches Patentamt

European Patent Office

Office européen des brevets

(11) Publication number: **0 262 512**
**A1**

## EUROPEAN PATENT APPLICATION

(21) Application number: 87113542.2

(22) Date of filing: 16.09.87

(51) Int. Cl.⁴: **A01K 13/00** , A61D 7/00 , A45D 24/22 , A61M 35/00 , A46B 11/00

(30) Priority: 23.09.86 IT 351486

(43) Date of publication of application:
06.04.88 Bulletin 88/14

(84) Designated Contracting States:
AT BE CH DE ES FR GB GR IT LI LU NL SE

(71) Applicant: **Falchieri, Roberto**
**Via Guidetti 45**
**I-40060 Passo Segni Baricella Province of**
**Bologna(IT)**

(72) Inventor: **Falchieri, Roberto**
**Via Guidetti 45**
**I-40060 Passo Segni Baricella Province of**
**Bologna(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) Medicated brush for antiparasitic use.

(57) The medicated brush comprises an active tooth-
ed part (1) made of plastic material impregnated with
an antiparasitic substance, and a handle (2,11)
adapted to be applied to said active part.

EP 0 262 512 A1

FIG.1

## MEDICATED BRUSH FOR ANTIPARASITIC USE

The present invention relates to a medicated brush for antiparasitic use.

It is known that animals living indoors, such as cats and dogs, require constant hygiene in order to avoid the spread of diseases. In particular it is necessary to ensure an effective protection against insects and parasites, which besides being a source of discomfort for the animal are the usual vectors of said diseases.

For this purpose, small plates are, for example, impregnated with insecticide substances and usually fitted to the collar of the animal. This protection and other similar ones, however, are poorly effective, since they do not allow a deep and uniform distribution of the insecticide or antiparasitic product on the entire coat of the animal. On the contrary, scarce parcticality in use, as well as the unpleasant effect on the animal itself, are often observed.

It is furthermore known, on the other hand, that similar problems of prevention and disinfestation from animal and vegetal parasites, such as lice, ticks and the like, also occur in the field of human hygiene.

The aim of the present invention is to solve the above described problems by devising a medicated brush which allows to effectively provide prevention and disinfestation from animal and vegetal parasites, both for human use and for veterinarian use.

Within the scope of this aim, a further object of the present invention is to provide a medicated brush which is simple in concept, easy to use and hygienically safe, as well as self-disinfectant.

This aim and this object are both achieved, according to the invention, by the present medicated brush, which is characterized in that it comprises a toothed active part, made of plastic material impregnated with an antiparasitic substance, and a handle adapted to be applied to said active part.

The details of the invention become apparent from the detailed description of a preferred embodiment of the medicated brush, illustrated only by way of non-limitative example in the accompanying drawing, wherein:

figure 1 is a side view, partly cutout and in cross section, of the medicated brush according to the invention;

figure 2 is a front view of the brush;

figure 3 is a side view of the medicated brush according to another aspect of the invention, particularly intended for human use;

figure 4 is a table sumarizing experimental tests carried out in order to determine the effectiveness of the brush according to the invention.

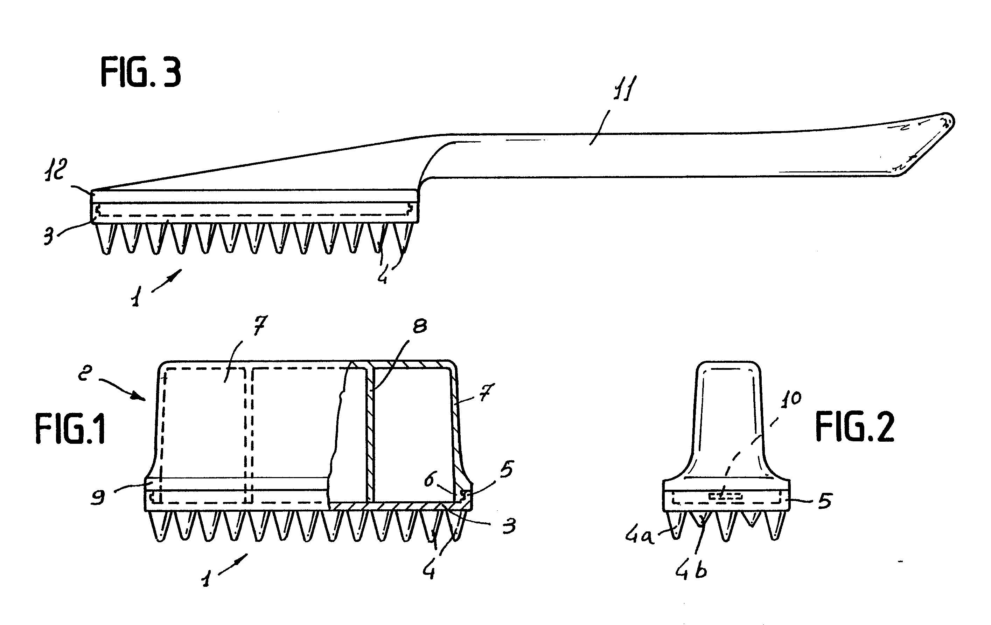

With particular reference first to figures 1 and 2, the medicated brush substantially consists of a toothed active part 1, intended to be passed through the fur, and of a handle 2 adapted to facilitate the grip and the movement of said active part, as well as to prevent the direct contact therewith on the part of the user.

The active part 1 of the brush is made of plastic material, such as polyethylene or polypropylene. Said material is impregnated, during molding, with adapted and preferably pyrethrum-based insecticide or antiparasitic substances. More in particular, are alternatively usable such active antiparasitic substances known as Permetrine (pyrethrum extract), marketed by the Wellcom company, Diazinone, marketed by the Ciba-Geigy company, and "Propoxur", marketed by Bayer and Enichem Italiana.

The use of a pyrethrum-based product is recommended by the fact that this substance, besides providing an effective antiparasitic action, is scarcely toxic and develops its maximum effect in the presence of heat, in this particular case that of the treated body.

The active substance is added to the plastic material, in a percentage ranging between 1% and 40% by weight and is preheated to a temperature of approximately 40-50 degrees centigrade, at the moment of the introduction of said plastic material into the molding press. The mixing of the active substance and of the plastic material occurs in the hot chamber of the press, at a temperature of approximately 180-200 degrees centigrade. The mix is then injected, in a conventional manner, into adapted molds.

The active part 1 is substantially defined by a rectangular base 3 with appropriately rounded corners, from a face whereof there extends a plurality of conical teeth 4 with their axes perpendicular to said base. The teeth 4 are arranged in an orderly manner along a plurality of rows parallel to the longitudinal sides of the base 3. Conveniently, said rows are alternately formed by teeth with different heights, respectively greater and smaller, as indicated by 4a and 4b in fig. 2, though they have an identical base cross section.

The base 3 has perimetral edge 5 which extends on the opposite side with respect to the teeth 4. The edge 5 is adapted to couple with a complementarily shaped shoulder 6 defined by the handle 2.

The handle 2, obtained by molding plastic material, is substantially formed by a prismatic body 7 significantly flattened along the middle longitudinal plane of the brush. The body 7 is internally hollow and is stiffened by a plurality of transverse ridges 8. A lip 9 is defined on the edge of the body 7 and is directed outwards so as to define a frame having dimensions corresponding with those of the base 3 of the active part. The shoulder 6 is formed perimetrally on the lip 9 for coupling to the border 5 of said base 3. The coupling of the active part 1 to the handle 2 is conveniently of the snap-together type, taking advantage of the elasticity of the respective materials. For this purpose, small teeth 10 are defined on the shoulder 6 and are adapted to engage related recesses provided on the inner side of the edge 5 of the active part.

Naturally it is possible to shape the handle of the brush in a different manner or with a different coupling system to the active part, its function being particularly that of allowing the free handling of the brush avoiding the direct contact of the user with the part impregnated with antiparasitic substance.

Figure 3 illustrates a brush according to another aspect of the invention, having an elongated handle 11 shaped specifically for human use. The handle 11 is provided at one end with a lip 12 which, in a manner fully similar to the preceding case, defines a framework having dimensions corresponding to those of the base 3 of the active part, whereto it couples in a similar manner.

To summarize, the medicated brush according to the invention allows the effective prevention and disinfestation from animal and vegetal parasites, mycoses and the like. In particular, regarding veterinarian use, it allows to brush the fur of animals in the usual manner, distributing at the same time on the entire coat the active substance with which it is impregnated. The fact is stressed that the differentiated height of the teeth 4a, 4b allows to apply the product at different levels in the fur, achieving a more uniform distribution. The conical shape of said teeth, which provides a wide contact with the fur, also contributes to this purpose.

The use of the brush can obviously be repeated with the required frequency according to the instances.

Experimental tests have been carried out at the Department of Infectious Diseases, Prophylaxis and Veterinarian Inspection of the Universtiy of Bologna, on 25 brushes according to the invention impregnate with 10% permetrine, a product which is active most of all against numerous ectoparasites of dogs belonging both to the class of insects and to that of arachnids.

The test was conducted on a total number of 26 dogs differing in race, sex and age, all belonging to infested environments and therefore all affected by ticks and/or fleas. Of these animals, 10 were treated by brushing them accurately only one, 9 were brushed once every two days for a total of 5 times, and 7, living together with as many of the preceding subjects, were left untreated as controls.

The examination of the parasitological condition, with regard obviously to infestations by ectoparasitic arthropods, was carried out clinically, by carefully examining the skin of the animals immediately before treatment, then after 24 hours and subsequently every other day up to the 9th day after the first brushing. During the entire abovesaid period the dogs being tested were also checked as to any pathological manifestations due to the treatments.

Several ticks and fleas were removed from some subjects in order to determine in the laboratory the genera to which the observed parasites belonged.

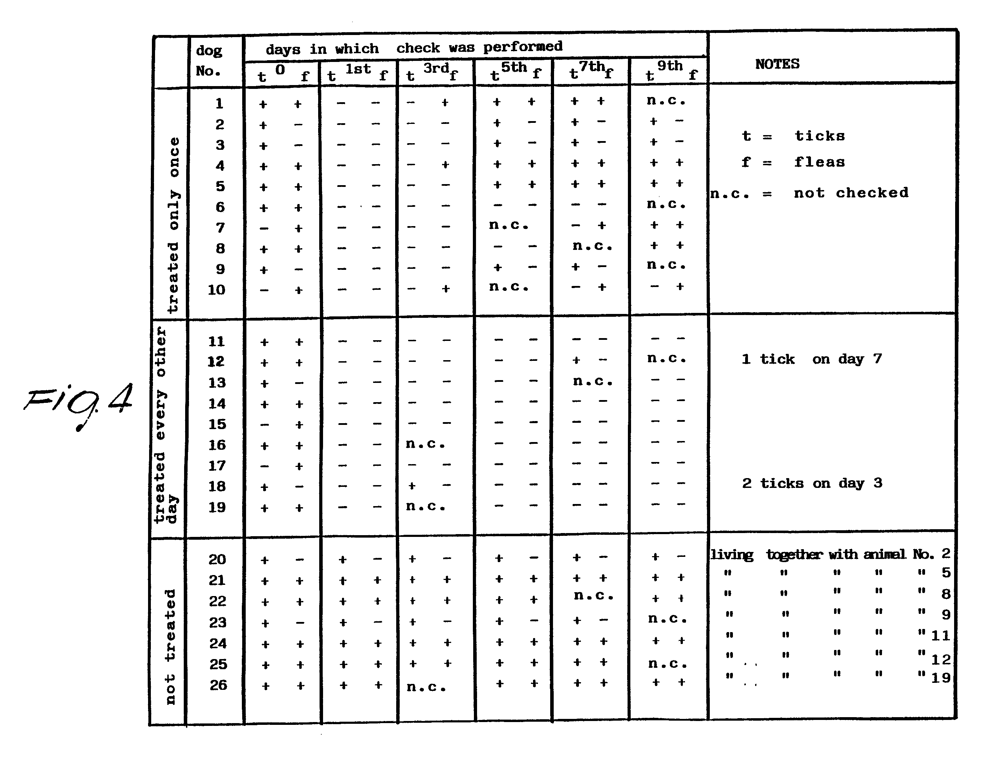

The results regarding the effectiveness of the brush according to the invention are summarized in the table of figure 4. This table indicates that the 10 dogs treated only once showed a disappearance of the ectoparasites 24 hours after brushing, and the presence of ticks and/or fleas reoccurred starting from the 3rd day, since the dogs lived in infested environments or in contact with other animals affected by parasites. The 9 dogs treated every other day for 5 times, though living in the same conditions as the preceding ones, also became negative after 24 hours and remained thus for the entire duration of the test, except for two dogs which yielded 1 and 2 ticks respectively on the 7th and on the 3rd day: however this finding should be considered too scarce and accidental, and therefore irrelevant as to the evaluation of the data. The 7 control subjects remained positive, as at the start, for the entire duration of the test.

It has thus been verified that by using brushes impregnated with 10% permetrine on dogs infested by ticks and/or fleas, the disappearance of the parasites occurs 24 hours after only one treatment. Leaving the animals in an infested environment, the presence of parasites resumes starting from the third day; vice versa, by performing a brushing every other day, the animals remain negative for the entire duration of the test.

The percentage of antiparasitic substance in the active part of the brush is related to the different nature of the parasites to be treated. It has been observed that a 3% permetrine concentration is sufficient against lice.

It is furthermore possible to impregnate the active part of the brush also with essential oil with vitamin F, a specific product for strengthening and improving the appearance of the fur of animals. Conveniently, in this case an active substance, composed of permetrine in a percentage ranging from 1% to 20% and of essential oil with vitamin F between 1% and 20%, is added to the plastic material.

Finally, the fact is stressed that the brush ensures maximum safety and hygiene in use, since besides preventing the ingestion and the mere contact with the antiparasitic substance, it is furthermore self-disinfectant and self-disinfesting.

In the practical embodiment of the invention, the materials employed, as well as the shapes and the dimensions, may be any according to the requirements.

## Claims

1. Medicated brush, characterized in that it comprises a toothed active part (1) made of plastic material impregnated with an antiparasitic substance, and a handle (2,11) adapted to be applied to said active part.

2. Brush according to claim 1, characterized in that said active part (1) is made of a material such as polyethylene impregnated during molding with an antiparasitic substance based on pyrethrum and the like.

3. Brush according to claim 1, characterized in that said active part consists of a base (3) provided on one face with a plurality of evenly distributed conical teeth (4) having their axes perpendicular to said base (3).

4. Brush according to claim 1, characterized in that said active part (1) is provided with parallel rows of teeth (4a,4b) alternately having different heights.

5. Brush according to claim 1, characterized in that said antiparasitic substance is added to said plastic material in a percentage ranging between 1% and 40% by weight.

6. Brush accroding to claim 1, characterized in that said handle (2,11) made by molding in plastic material, consists of a grip body provided at the edge with a lip (9,12) turned outwards and provided with coupling means (10) adapted to elastically engage said active part (1).

7. Brush according to claim 1, characterized in that said plastic material is impregnated with an antiparasitic substance based on pyrethrum in a percentage by weight ranging between 1% and 20% and with essential oil with vitamin F ranging between 1% and 20%.

FIG. 3

FIG.1

FIG.2

0 262 512

**Fig. 4**

| | dog No. | days in which check was performed | | | | | | | | | | | | NOTES |
|---|---|---|---|---|---|---|---|---|---|---|---|---|---|---|
| | | t 0 f | | t 1st f | | t 3rd f | | t 5th f | | t 7th f | | t 9th f | | |
| treated only once | 1 | + | + | − | − | − | + | + | + | + | + | n.c. | | |
| | 2 | + | − | − | − | − | − | + | − | + | − | + | − | t = ticks |
| | 3 | + | − | − | − | − | − | + | − | + | − | + | − | f = fleas |
| | 4 | + | + | − | − | − | + | + | + | + | + | + | + | n.c. = not checked |
| | 5 | + | + | − | − | − | − | + | + | + | + | + | + | |
| | 6 | + | + | − | − | − | − | − | − | − | − | n.c. | | |
| | 7 | − | + | − | − | − | − | n.c. | | − | + | + | + | |
| | 8 | + | + | − | − | − | − | − | − | n.c. | | + | + | |
| | 9 | + | − | − | − | − | − | + | − | + | − | n.c. | | |
| | 10 | − | + | − | − | − | + | n.c. | | − | + | − | + | |
| treated every other day | 11 | + | + | − | − | − | − | − | − | − | − | − | − | |
| | 12 | + | + | − | − | − | − | − | − | + | − | n.c. | | 1 tick on day 7 |
| | 13 | + | − | − | − | − | − | − | − | n.c. | | − | − | |
| | 14 | + | + | − | − | − | − | − | − | − | − | − | − | |
| | 15 | − | + | − | − | − | − | − | − | − | − | − | − | |
| | 16 | + | + | − | − | n.c. | | − | − | − | − | − | − | |
| | 17 | − | + | − | − | − | − | − | − | − | − | − | − | |
| | 18 | + | − | − | − | + | − | − | − | − | − | − | − | 2 ticks on day 3 |
| | 19 | + | + | − | − | n.c. | | − | − | − | − | − | − | |
| not treated | 20 | + | − | + | − | + | − | + | − | + | − | + | − | living together with animal No. 2 |
| | 21 | + | + | + | + | + | + | + | + | + | + | + | + | " " " " " 5 |
| | 22 | + | + | + | + | + | + | + | + | n.c. | | + | + | " " " " " 8 |
| | 23 | + | − | + | − | + | − | + | − | + | − | n.c. | | " " " " " 9 |
| | 24 | + | + | + | + | + | + | + | + | + | + | + | + | " " " " " 11 |
| | 25 | + | + | + | + | + | + | + | + | + | + | n.c. | | " " " " " 12 |
| | 26 | + | + | + | + | n.c. | | + | + | + | + | + | + | " " " " " 19 |

0 262 512

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 122 605 (WELLCOME)<br>* Pages 2,3; page 6, examples 1-4 *<br>--- | 1,2,5 | A 01 K 13/00<br>A 61 D 7/00<br>A 45 D 24/22<br>A 61 M 35/00<br>A 46 B 11/00 |
| A | US-A-4 543 913 (WILKESON)<br>* Figures 1-4; column 4, lines 9-21 *<br>--- | 3 | |
| A | US-A-3 007 441 (EYER)<br>* Figures 1-4; column 1, lines 39-54 *<br>--- | 4 | |
| A | US-A-4 237 822 (KAISER)<br>* Figures 1,2,4; column 3, lines 15-34 * | 6 | |

TECHNICAL FIELDS
SEARCHED (Int. Cl.4)

A 01 K

The present search report has been drawn up for all claims

| Place of search | Date of completion of the search | Examiner |
|---|---|---|
| THE HAGUE | 05-01-1988 | VILBIG K |